Europäisches Patentamt

European Patent Office

Office européen des brevets

(19)

(11) Numéro de publication: **0 015 363**
**B1**

(12) **FASCICULE DE BREVET EUROPEEN**

(45) Date de publication du fascicule du brevet: **10.08.83**

(51) Int. Cl.³: **H 04 J  6/02,  G 10 L  1/04**

(21) Numéro de dépôt: **80100190.0**

(22) Date de dépôt: **16.01.80**

(54) **Détecteur de parole à niveau de seuil variable.**

(30) Priorité: **05.03.79 US  17791**

(43) Date de publication de la demande:
**17.09.80 Bulletin 80/19**

(45) Mention de la délivrance du brevet:
**10.08.83 Bulletin 83/32**

(84) Etats contractants désignés:
**DE FR GB**

(56) Documents cités:
**DE - A - 2 317 718**
**FR - A - 1 565 735**
**FR - A - 2 121 656**
**FR - A - 2 217 873**
**FR - A - 2 304 899**
**JP - A - 53 128 919**
**JP - A - 53 139 912**
**US - A - 3 882 458**
**US - A - 4 008 375**
**US - A - 4 028 496**
**US - A - 4 052 568**

(73) Titulaire: **International Business Machines Corporation**
**Old Orchard Road**
**Armonk, N.Y. 10504 (US)**

(72) Inventeur: **Crouse, William George**
**5018 Holly Ridge Dr.**
**Raleigh, NC 27612 (US)**
Inventeur: **Knox, Charles, Robert**
**1509 Caswell St.,**
**Raleigh, NC 27608 (US)**

(74) Mandataire: **Bonin, Jean-Jacques**
**COMPAGNIE IBM FRANCE Département de Propriété Industrielle**
**F-06610 La Gaude (FR)**

Courier Press, Leamington Spa, England.

Détecteur de parole à niveau de seuil variable

Domaine technique

La présente invention concerne les systèmes analogiques ou numériques de transmission de la voix tels que ceux qui sont généralement employés aux fins de communications à longue distance faisant appel à l'emploi de canaux de transmission radio. Plus particulièrement, l'invention concerne les systèmes de communication tels que ceux qui sont utilisés dans les transmissions par satellite, dans des systèmes d'emmagasinage de la voix et dans les techniques de compression de la voix dans lesquelles des détecteurs de parole sont employés.

Technique antérieure

Dans ces systèmes de communication, on a souvent recours à des techniques de compression de la voix pour obtenir une utilisation optimale de la capacité disponible du canal. Ces techniques tirent parti du fait que, lorsqu'une personne parle, les paroles qu'elle prononce sont séparées par des silences. Pendant ces silences, des paroles prononcées par d'autres personnes peuvent être transmises sur un même canal, augmentant ainsi l'utilisation effective du canal et le nombre d'informations transmises.

Il est évident qu'un dispositif permettant de reconnaître les périodes durant lesquelles des paroles sont effectivement prononcées est indispensable dans tout système de compression de la voix. Les dispositifs de ce type qui existent dans l'art antérieure sont souvent appelés "détecteurs de parole", et cette appellation sera retenue ci-après pour décrire la fonction et l'appareil employés à cette fin.

Les détecteurs de parole de l'art antérieur sont de deux types généraux. Le premier de ces types fait appel à l'emploi d'une technique dans laquelle le spectre de fréquences d'un signal reçu est analysé afin de détecter la présence de paroles. Les détecteurs de ce type, bien qu'ils donnent d'excellents résultats, sont coûteux et ne peuvent pas fonctionner en temps réel en raison de l'importance du traitement numérique ou par calculateur qui est nécessaire pour analyser les configurations de signaux, au moyen, par exemple, de transformées de Fourier, afin d'isoler les signaux analogiques représentant les paroles du bruit ou des silences.

Le second type connu de détecteur de parole compare l'amplitude instantanée du signal reçu avec une valeur de seuil fixe. Si l'amplitude du signal dépasse cette valeur de seuil, le signal est considéré comme représentant la parole. Ce type de détecteur donne de bons résultats à la condition que le niveau de bruit de fond dans le système soit très inférieure au niveau de seuil, et que l'amplitude la plus faible des signaux de parole soit supérieure au niveau de seuil. C'est le cas du détecteur décrit dans la brevet US—A—3882458.

Dans les milieux tels que ceux dans lesquels les réseaux téléphoniques commutés publics sont utilisés, la plage des niveaux des signaux de parole recouvre celle des niveaux de bruit généralement présents. Pour un ensemble donné de connexions établissant une voie de communication, un niveau fixe donné peut se révéler trop élevé, tout les signaux de parole de faible amplitude étant alors perdus. Dans d'autres cas, le bruit de fond peut se trouver au même niveau que le seuil, ou à proximeté de celui-ci, le bruit de fond ne pouvant alors plus être distingué des signaux de parole.

On a cherché à résoudre ce problème en réglant le niveau de seuil de telle sorte qu'il dépasse toujours légèrement le niveau de bruit de fond, ce réglage ne devant être effectué que lorsque de bruit seul est présent sur la ligne ou dans le canal. Le problème devient alors un problème de discrimination entre la parole et le bruit de fond; c'est cette difficulté que l'on a cherché à pallier grâce à l'emploi du présent détecteur à niveau de seuil variable.

Les solutions proposées dans l'art antérieur et évoquées ci-dessus n'ont pas permis de résoudre ce problème, notamment dans le cas de réseaux de communication par satellite.

L'un des objets de la présente invention est donc de fournir un dispositif de détection de la parole dans lequel un niveau de seuil variable est établi de manière à permettre une répartition efficace de la capacité du canal entre différents utilisateurs, les signaux dont l'amplitude dépasse ledit niveau de seuil étant considérés comme représentant la parole, les autres signaux représentant du bruit ou des silences.

Un autre objet de la présente invention est de fournir un dispositif de détection de la parole qui fonctionne en temps réel et permette d'obtenir un niveau de seuil que l'on peut faire varier de façon précise, de manière à commander la répartition de la capacité de canal entre différents utilisateurs.

La présente invention comme défine dans la revendication 1 permet notamment d'atteindre les objectifs ci-dessus grâce à l'emploi d'un circuit d'échantillonnage du signal analogique reçu. Ce circuit d'échantillonnage est mis en service n fois pendant un intervalle de temps T. L'amplitude A de chaque échantillon ainsi obtenu est mesurée ou calculée et la valeur la plus grande obtenue pendant ledit intervalle de temps est mise en mémoire sous la forme $A_m$. Cette valeur est comparée avec la valeur précédemment emmagasinée pendant un intervalle de temps précédent, qui représente la valeur la plus faible obtenue lors des intervalles de temps précédents. La plus faible de ces deux valeurs est mise en mémoire sous la forme d'une nouvelle valeur $B_m$. Ce processus se poursuit pendant i intervalles de temps T. A la fin du $i^{ème}$ intervalle de temps, la valeur emmagasinée est multipliée par une constante k et le produit est emmagasiné en tant que valeur de seuil pour les i intervalles de temps suivants.

D'autres objets, caractéristiques et avantages de la présente invention ressortiront mieux de l'exposé qui suit, fait en référence aux dessins annexés à ce texte, qui représentent un mode de réalisation préférée de celle-ci.

La figure 1 représente schématiquement un circuit de détection de la parole comportant un niveau de seuil fixe.

La figure 2 représente schématiquement un circuit de détection de la parole comportant un niveau de seuil variable, qui constitue la réalisation préférée de la présente invention.

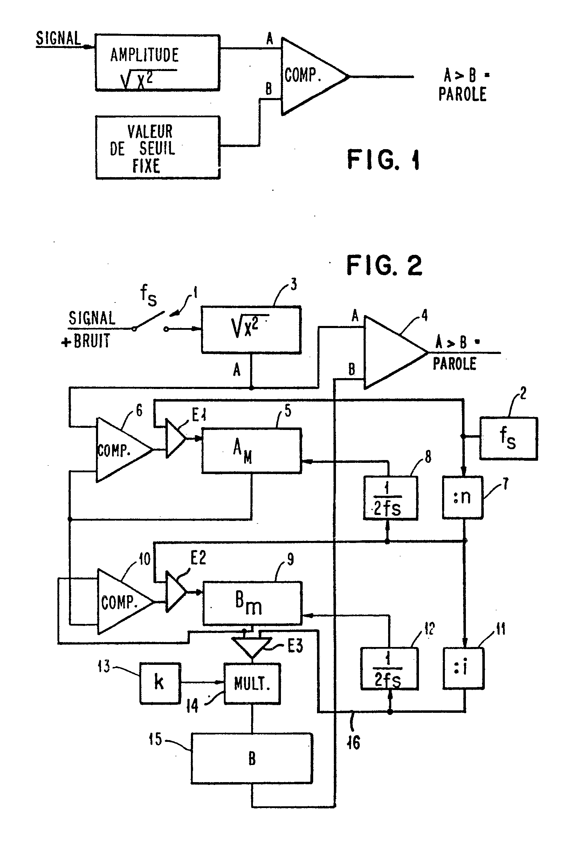

Sur la figure 1, un signal reçu possédant une valeur X à un instant donné et une amplitude de $\sqrt{X^2}$ est comparé avec une valeur de seuil fixe dans un comparateur. Lorsque la valeur de l'amplitude dudit signal est supérieure à celle du seuil, on considère qu'il s'agit d'un signal représentant la parole. La capacité du canal peut alors être affectée à la transmission des données représentées par ce signal X. Pendant les intervalles de temps durant lesquels l'amplitude du signal reçu est inférieure à la valeur de seuil, le canal peut être employé par d'autres utilisateurs.

La figure 2 représente la réalisation préférée de la présente invention, dans laquelle un niveau de seuil variable est engendré aux fins d'une comparaison avec l'amplitude du signal reçu. Sur cette figure, un signal reçu et/ou la composante de bruit d'un signal X est échantillonné à une fréquence $f_s$ au moyen d'un commutateur schématiquement représenté en 1 et commandé à la fréquence $f_s$, cette dernière étant établie par une horloge 2. Un circuit 3 fournit la valeur absolue A de l'amplitude de cet échantillon. On obtient ainsi un signal qui est comparé dans un comparateur 4 avec un niveau de seuil B de la façon indiquée sur la figure 1, de telle sorte qui si l'amplitude du signal A est supérieure à celle du signal B, le signal A soit considéré comme représentant la parole.

La valeur de seuil B est obtenue selon le mécanisme logique décrit ci-après:

Au départ, le registre 5 contient la valeur "zéro" et le registre 9 contient une valeur élevée (sur laquelle des éclaircissements seront donnés plus loin). Le comparateur 6 est conçu de façon à ne laisser passer que la plus grande des deux valeurs comparées, tandis que le comparateur 10 ne laisse, lui, passer que la plus petite des deux valeurs comparées.

Lorsqu'un premier échantillon de valeur absolue Al est délivré par le circuit 3, cet échantillon est comparé au "zéro" contenu dans le registre 5 et la valeur A1 est transférée dans ce registre à l'instant d'échantillonnage t1, grâce à la porte ET E1.

Le second échantillon A2 est ensuite comparé à l'échantillon A1 contenu dans le registre 5 et la valeur du plus grand de ces deux échantillons est transférée (ou reste) dans ce registre à l'instant d'échantillonage t2.

Le même processus est répété pour n échantillons successifs prélevés durant une période de temps donnée T.

A la fin de la période T le registre 5 contient la valeur $A_M$ du plus grand (en valeur absolue) des échantillons prélevés durant cette période.

Cette valeur est comparée dans le comparateur 10 avec la valeur contenue dans le registre 9 et, du fait que ce dernier contient une valeur élevée la valeur $A_M$ est transférée dans ce registre. Ce transfert s'opère au premier instant $t'1$ d'échantillonnage d'une seconde période de temps T', grâce à la porte ET E2 dont la borne de conditionnement est raccordée à la sortie d'un diviseur de fréquence par n référencé 7, lui-même alimenté par le circuit d'horloge 2. Le diviseur de fréquence 7 délivre donc des impulsions à la fréquence fs/n, c'est-à-dire dont la période est T. D'un autre côté un circuit à retard 8 connecté également sur la sortie du diviseur 7 et introduisant un retard de 1/2fs, permet de ramener à zéro le contenu du registre 5 juste après le transfert dans le registre 9 du résultat de la comparaison entre le contenu du registre 5 et celui du registre 9.

Une nouvelle période d'échantillonnage T' de durée T recommence, à la fin de laquelle le registre 5 contient une nouvelle valeur absolue maximale $A_M'$. Cette dernière valeur est alors comparée à la valeur $A_M$ précédente dans le comparateur 10 et la plus faible de ces valeurs est introduite dans le registre 9, après quoi le registre 5 est remis à zéro, grâce au circuit à retard 8.

Une autre période d'échantillonnage T" de durée T recommence et ainsi de suite jusqu'à ce que i périodes de durée T chacune se soient écoulées.

A la fin de la période ixT le registre 9 contient la plus faible (en valeur absolue) des valeurs maximales (en valeurs absolues) des échantillons prélevés durant chacune des i périodes d'échantillonnage de durée T chacune, soit la valeur $B_m$.

Cette valeur est alors transférée dans un multiplicateur 14, où elle est multipliée par un facteur k approprié contenu dans un registre 13. Le résultat de l'opération, soit une valeur B, est introduit dans un registre 15. Ce transfert s'opère au premier instant d'échantillonnage d'une nouvelle période de temps de durée ixT grâce à une porte ET E3 dont la porte de conditionnement est raccordée à la sortie d'un diviseur de fréquence par i référencé 11, lui-même alimenté par la sortie du diviseur par n référencé 7. Le diviseur 11 délivre donc des impulsions à la fréquence fs/nxi, c'est-à-dire dont la période est ixT. D'un autre côté un circuit à retard 12 connecté également sur la sortie du diviseur 11 et introduisant un retard 1/2fs, permet de ramener à une valeur élevée le contenu du registre 9 juste après que la valeur $B_m$ a été transférée au multiplicateur 14. Cette valeur élevée est choisie de façon à être supérieure à n'importe quelle valeur prévisible de $A_M$.

La valeur B contenue dans le registre 15 est appliquée au comparateur 4 en tant que valeur de seuil pour toute la période suivante de durée $i \times T$, et ainsi de suite.

La valeur emmagasinée dans le registre 15 est présente en permanance à sa sortie et une nouvelle valeur est chargée dans ce registre chaque fois que son entrée de conditionnement 16 est activée.

La valeur effective des différentes variables ne présente pas un caractère très critique. Les valeurs données ci-après ont été déterminées expérimentalement lors de la mise en oeuvre de la réalisation préférée de la présente invention:

$$n=480, \quad T=15 \text{ milliseconds,}$$
$$i=60, \quad k=2{,}25.$$

Les règles générales ci'après peuvent être appliquées pour choisir les valeurs applicables:

$T/n$ doit être supérieur à la fréquence de Nyquist.

$2T$ doit être inférieur à la fréquence des syllabes dans la parole.

$i.T$ doit être très supérieur à la période des syllabes.

$k$ proportionnel à $i/T$, où $k$ donne les meilleurs résultats, ainsi qu'on l'a constaté expérimentalement, lorsque sa valeur est comprise entre 1,9 et 3,0, la valeur préférée dans le cas de la présente réalisation étant de 2,25.

Les tests effectués ont permis de constater que la présente invention fonctionnait exceptionnellement bien en temps réel. Les circuits sont simples, peu coûteux et de faibles dimensions, et peuvent donc aisément être réalisés en utilisant les techniques dites d'intégration à grande échelle. Le détecteur décrit ci-dessus est original car le niveau de seuil est constamment ajusté à la valeur requise sans avoir à recourir à une analyse du spectre pour différencier les signaux de parole et les signaux de bruit. Le coût du matériel utilisé est beaucoup plus faible que dans le cas de celui qui est nécessaire aux fins d'une analyse du spectre, et le détecteur de l'invention peut être directement utilisé dans le produit considéré au lieu de devoir l'être en laboratoire, comme l'exigent souvent les techniques d'analyse du spectre.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

## Revendications

1. Détecteur de parole à niveau de seuil variable, pour détecter des signaux de parole parmi une source de signaux pouvant comprendre d'autres sortes de signaux, du genre comprenant:

des moyens d'échantillonnage (3) pour échantillonner les signaux issus de ladite source à une fréquence fs,

des moyens pour mesurer les valeurs absolues A des échantillons prélevés par lesdits moyens d'échantillonnage,

des premiers moyens de comparaison (6) pour comparer entre-elles les valeurs absolues A desdits échantillons,

des premiers moyens d'emmagasinage (5) pour emmagasiner la valeur absolue maximale $A_M$ de n échantillons prélevés durant une première période de temps T, déterminée par lesdits premiers moyens de comparaison,

des moyens pour déterminer, à partir des valeurs absolues maximales obtenues durant plusieurs périodes de temps successives, une valeur de seuil d'amplitude B desdits signaux,

des deuxièmes moyens de comparaison (4) pour comparer les valeurs absolues A desdits échantillons avec ladite valeur de seuil B, et

des moyens pour indiquer la présence de parole lorsque la valeur desdits échantillons est supérieure à ladite valeur de seuil, caractérisé en ce que lesdits moyens pour déterminer ladite valeur de seuil comportent:

des troisièmes moyens de comparaison (10) pour comparer les i valeurs maximales, déterminèes chacune comme précédemment, durant i périodes de temps T consécutives,

des seconds moyens d'emmagasinage (9) pour emmagasiner la valeur minimale $B_m$ desdites i valeurs maximales déterminées chacune par lesdits troisièmes moyens de comparaison, et

des moyens de multiplication (13, 14) pour multiplier par un facteur k approprié ladite valeur minimale $B_m$, et obtenir ainsi ladite valeur de seuil B.

2. Détecteur selon la revendication 1 caractérisé en ce que lesdits premiers moyens de comparaison (6) sont conçus de façon à comparer la valeur absolue de chaque échantillon prélevé par lesdits moyens d'échantillonnage avec le contenu desdits premiers moyens d'emmagasinage (5) et à transférer dans ces derniers après chaque comparaison, la plus grande des deux valeurs comparées.

3. Détecteur selon la revendication 2, caractérisé en ce qu'il comporte des moyens pour ramener à zéro le contenu desdits premiers moyens d'emmagasinage à la fin de chacune desdites i périodes T, après que ladite valeur maximale $A_M$ a été comparée avec le contenu desdits seconds moyens d'emmagasinage.

4. Détecteur selon l'une quelconque des revendications précédentes, caractérisé en ce que lesdits troisièmes moyens de comparaison (10) sont conçus de façon à comparer ladite valeur maximale $A_M$ contenue dans lesdits premiers moyens d'emmagasinage (5) avec le contenu desdits seconds moyens d'emmagasinage (9) et à transférer dans ces derniers, après chaque comparaison, la plus petite des deux valeurs comparées.

5. Détecteur selon la revendication 4, caractérisé en ce qu'il comporte des moyens pour amener à une valeur élevée plus grande que n'importe quelle valeur prévisible de ladite valeur maximale $A_M$, le contenu desdits seconds moyens d'emmagasinage, à la fin de la période de temps $i \times T$, après que ladite valeur minimale $B_m$ a été multipliée par ledit facteur k pour obtenir ladite valeur de seuil B.

6. Détecteur selon les revendications 3 et 5, caractérisé en ce qu'il comporte:

un circuit d'horloge (2) délivrant des impulsions chronologiques à la fréquence fs, pour activer lesdits moyens d'échantillonnage et transférer dans lesdits premiers moyens d'emmagasinage, les résultats des comparaisons effectuées dans lesdits premiers moyens de comparaison (6), à cette fréquence fs,

un diviseur de fréquence par n (7) connecté audit circuit d'horloge pour délivrer des impulsions à la fréquence fs/n et transférer dans lesdits seconds moyens d'emmagasinage (9) les résultats des comparaisons effectuées dans lesdits troisièmes moyens de comparaison (10) à la fréquence fs/n,

un diviseur de fréquence par i (11) connecté à la sortie du diviseur de fréquence par n, pour délivrer des impulsions à la fréquence $fs/n \times i$ et appliquer ladite valeur $B_m$ contenue dans lesdits seconds moyens d'emmagasinage après la fin d'une période de temps $i \times T$, auxdits moyens de multiplication (13, 14).

7. Détecteur selon la revendication 6, caractérisé en ce qu'il comporte:

un premier circuit à retard (8), engendrant un retard 1/2fs, connecté à la sortie dudit diviseur de fréquence par n (7) pour commander lesdits moyens de remise à zéro desdites premiers moyens d'emmagasinage (5), et.

un second circuit à retard (12), engendrant un retard de 1/2fs, connecté à la sortie dudit diviseur de fréquence par i, pour commander lesdits moyens d'amenée à une valeur élevée desdits second moyens d'emmagasinage (9).

8. Détecteur selon l'une quelconque des revendications précédentes, caractérisé en ce que la sortie desdits moyens de multiplication (13, 14) est connectée à des troisièmes moyens d'emmagasinage (15), pour emmagasiner ladite valeur de seuil B, et la sortie desdits troisièmes moyens d'emmagasinage est connectée à une entrée desdits deuxièmes moyens de comparaison (4).

9. Détecteur selon l'une quelconque des revendications précédentes caractérisé en ce que, la valeur dudit facteur k est comprise entre 1,9 et 3.

**Patentansprüche**

1. Spracherkenner mit variablem Schwellenwert zum Erkennen von Sprachsignalen aus einer Signalquelle, die noch andere Signalarten bereithalten kann, und in einer Ausstattung, die enthält:

Abtastmittel (3) zum impulsweisen Abtasten der von genannter Quelle stammenden Signale mit einer Frequenz fs,

Mittel zum Messen der Absolutwerte A der von genannten Abtastmitteln erhobenen Probenimpulse,

erste Vergleichsmittel (6) zum Vergleichen der Absolutwerte A genannter Probenimpulse untereinander,

erste Speichermittel (5) zum Speichern des maximalen Absolutwertes $A_M$ von n während einer ersten, durch die genannten ersten Vergleichsmittel bestimmten Zeitperiode T erhobenen Probenimpulsen,

Mittel zum Bestimmen eines Schwellenwertes mit Amplitude B aus genannten Signalen auf der Grundlage von während mehrerer aufeinanderfolgender Zeitperioden erhaltenen maximalen Absolutwerten,

zweite Vergleichsmittel (4) zum Vergleich der Absolutwerte A genannter Probenimpulse mit dem Genannten Schwellenwert B und

Mittel zur Anzeige des Auftretens von Sprachsignalen, wenn der Wert genannter Probenimpulse größer ist als der genannte Schwellenwert, dadurch gekennzeichnet, daß genannte Mittel zum Bestimmen des genannten Schwellenwertes enthalten:

dritte Vergleichsmittel (10) zum Vergleich der während i aufeinanderfolgender Zeitperioden T jeweils, wie zuvor angegeben, ermittelten Maximalwerte der Anzahl i,

zweite Speichermittel (9) zum Speichern des Minimalwertes $B_m$ aus genannten, jeweils durch genannte dritte Vergleichsmittel erhaltenen Maximalwerten der Anzahl i und

Multiplikationsmittel (13, 14), zum Multiplizieren genannten Minimalwertes $B_m$ mit einem zweckentsprechenden Faktor k, um so genannten Schwellenwert B zu erhalten.

2. Spracherkenner nach Anspruch 1, dadurch gekennzeichnet, daß genannte erste Vergleichsmittel (6) zum Vergleich des Absolutwerts eines jeden von genannten Abtastmitteln erhobenen Probenimpulses mit dem Inhalt genannter erster Speichermittel (5) und zum nach jedem Vergleichsvorgang zu erfolgenden Übertragen des größten von beiden miteinander verglichenen Werten in diese letzteren ausgelegt sind.

3. Spracherkenner nach Anspruch 2, dadurch gekennzeichnet, daß Mittel vorgesehen sind, die den Inhalt genannter erster Speichermittel am Ende jeder der genannten i Perioden T nach Vergleich genannten Maximal werts $A_M$ mit dem Inhalt genannter zweiter Speichermittel auf Null zurücksetzen.

4. Spracherkenner nach einem der vorhergehenden Ansprüche, dadurch gekennzeichnet, daß genannte dritte Vergleichsmittel (10) zum Vergleich genannter, in genannten ersten Speichermitteln (5) enthaltenen Maximalwerts $A_M$ mit dem Inhalt genannter zweiter Speichermittel (9) und zum Übertragen des kleinsten beider miteinander verglichenen Werte in diese letzteren nach jedem Vergleich ausgelegt sind.

5. Spracherkenner nach Anspruch 4, dadurch gekennzeichnet, daß Mittel enthalten sind, die am Ende der Zeitperiode i-T, nachdem genannter Minimalwert $B_m$ zum Ermitteln genannten Schwellenwerts B mit genanntem Faktor k multipliziert ist, den Inhalt genannter zweiter Speichermittel auf einen gegenüber irgendeinem absehbaren Wert für genannten Maximalwert $A_M$ größeren Wert anheben.

6. Spracherkenner nach Anspruch 3 und 5, dadurch gekennzeichnet, daß hierin enthalten ist:

eine Taktgeberschaltung (2), Taktgeberimpulse mit Frequenz fs, um die genannten Abtastmittel zu betreiben und um die Ergebnisse der in genannten ersten Vergleichsmitteln (6) ausgeführten Vergleichsvorgänge bei dieser Frequenz fs in genannte erste Speichermittel zu übertragen,

ein an genannte Taktgeberschaltung angeschlossenen Frequenzteiler (7) mit Divisor n, der Impulse mit der Frequenz fs/n abgibt, so daß die Ergebnisse der in den genannten dritten Vergleichsmitteln (10) durchgeführten Vergleichsvorgänge bei der Frequenz fs/n in genannte zweite Speichermittel (9) übertragen werden,

ein an den Ausgang des Frequenzteilers mit Divisor n angeschlossenen Frequenzteiler (11) mit Divisor i, der Impulse mit der Frequenz $fs/n \cdot i$ abgibt, um genannten, in genannten zweiten Speichermitteln am Ende einer Zeitperiode $i \cdot T$ enthaltenen Wert $B_m$ an genannte Multiplikationsmittel (14) anzulegen.

7. Spracherkenner nach Anspruch 6, dadurch gekennzeichnet, daß hierin enthalten ist:

eine erste, eine Verzögerung von 1/2fs herbeiführende und an den Ausgang genannten Frequenzteilers (7) mit Divisor n angeschlossene Verzögerungseinheit (8), um genannte Rücksetzmittel genannter ersten Speichermittel (5) zu steuern, und

eine zweite, eine Verzögerung von 1/2fs herbeiführende und an den Ausgang genannten Frequenzteilers mit Divisor i angeschlossene Verzögerungseinheit (12), um genannte Mittel (9) zum Anheben genannter zweiter Speichermittel auf einen größeren Wert zu steuern.

8. Spracherkenner nach einem der vorhergehenden Ansprüche, dadurch gekennzeichnet, daß der Ausgang genannter Multiplikationsmittel (13, 14) zwecks Speicherns genannten Schwellenwerts B an dritte Speichermittel (15) angeschlossen ist, deren Ausgang an einen Eingang genannter zweiter Vergleichsmittel (4) angeschlossen ist.

9. Spracherkenner nach einem der vorhergehenden Ansprüche, dadurch gekennzeichnet, daß der Wert genannten Faktors k zwischen 1, 9 und 3 liegt.

## Claims

1. Speech detector with a variable threshold level, for detecting speech signals amongst a source of signals that may contain other sorts of signals, of the type including:

sampling means (3) for sampling signals issued from said source at a frequency fs,

measuring means for measuring the absolute values A of the samples taken by said sampling means,

first comparing means (6) for comparing the absolute values A of said samples to each other,

first storing means (5) for storing the maximum absolute value $A_M$ of the n samples taken during an initial time period T, determined by said first comparing means,

means for determining, from the maximum absolute values obtained during several successive time periods, an amplitude threshold value B of said signals,

second comparing means (4) for comparing the absolute values A of said samples to said threshold value B, and

means for indicating the presence of speech whenever the value of said samples is greater than said threshold value, characterized in that said means for determining said threshold value include:

third comparing means (10) for comparing the i maximum values, each being determined as above, during i consecutive time periods T, second storing means (9) for storing the minimum value $B_m$ of said i maximum values, each determined by said third comparing means, and

multiplying means (13, 14) for multiplying said minimum value $B_m$ by an appropriate factor k, and to thus obtain said threshold value B.

2. Detector according to claim 1 characterized in that said first comparing means (6) are so designed as to compare the absolute value of each sample taken by said sampling means to the contents of said first storing means (5) and to transfer into these latter, after each comparison, the larger of the two values compared.

3. Detector according to claim 2, characterized in that it includes means for resetting to zero the contents of said first storing means at the end of each of said i periods T, after said maximum value $A_M$ has been compared to the contents of said second storing means.

4. Detector according to any one of the preceding claims, characterized in that said third comparing means (10) are so designed as to compare said maximum value $A_M$ contained in said first storing means (5) to the contents of said second storing means (9) and to transfer into these latter, after each comparison, the smaller of the two values compared.

5. Detector according to claim 4, characterized in that it includes means for setting to a high value, greater than any predictable value of said maximum value $A_M$, the contents of said second storing means, at the end of the time period $i \times T$, after said minimum value $B_m$ has been multiplied by said factor k to obtain said threshold value B.

6. Detector according to claims 3 and 5, characterized in that it includes:

a clock circuit (2) issuing timing pulses at the frequency fs, for activating said sampling means and for transferring into the said first storing means, the results of the comparisons made in the said first comparing means (6) at this frequency fs,

a frequency divider by n (7) connected to said clock circuit for issuing pulses at the frequency fs/n and for transferring into said second storing means (9) the results of the comparisons made in said third comparing means (10) at the frequency fs/n,

a frequency divider by i (11), connected to the output of the frequency divider by n for issuing pulses at the frequency fs/n×i and for applying said value $B_m$ contained in said second storing means at the end of a period of time $i \times T$, to said multiplying means (13, 14).

7. Detector according to claim 6, characterized in that it includes:

a first delay line (8), generating a delay of 1/2fs, connected to the output of said frequency divider by n (7) for controlling said means for resetting said first storing means (5), and

a second delay line (12), generating a delay of 1/2fs, connected to the output of said frequency divider by i, for controlling said means for setting to a high value said second storing means (9).

8. Detector according to any one of the preceding claims, characterized in that the output of said multiplying means (13, 14) is connected to third storing means (15), for storing said threshold value B, and the output of said third storing means is connected to an input of said second comparing means (4).

9. Detector according to any one of the preceding claims characterized in that the value of said factor k is between 1.9 and 3 inclusive.

FIG. 1

FIG. 2